# EUROPEAN PATENT SPECIFICATION

(11) **EP 3 076 653 B1**
(45) Date of publication and mention of the grant of the patent: **26.06.2019**
(21) Application number: 14866148.1
(22) Date of filing: 09.10.2014
(51) Int. Cl.: H04N 5/225

(54) **DISPLAY DEVICE AND SHOOTING DISPLAY METHOD THEREFOR**
ANZEIGEVORRICHTUNG UND AUFNAHMEANZEIGEVERFAHREN DAFÜR
DISPOSITIF D'AFFICHAGE ET SON PROCÉDÉ D'AFFICHAGE ET DE PRISE DE VUES

(30) Priority: 26.11.2013 CN 201310608258
(43) Date of publication of application: 05.10.2016
(73) Proprietor: Guangdong Oppo Mobile Telecommunications Corp., Ltd, Dongguan, Guangdong 523860 (CN)
(72) Inventor: ZHANG, Weizheng, Dongguan, Guangdong 523860 (CN)
(74) Representative: advotec.
(86) International application number: PCT/CN2014/088203
(87) International publication number: WO 2015/078236

(56) References cited:
- EP-A1- 2 475 010
- CN-A- 101 119 435
- CN-A- 102 348 091
- CN-A- 103 780 812
- CN-U- 202 696 751
- JP-A- H0 846 162
- US-A1- 2005 253 834
- US-A1- 2009 180 071
- US-A1- 2010 066 800
- US-A1- 2011 019 056
- MATTHEW HIRSCH ET AL: "BiDi screen", ACM TRANSACTIONS ON GRAPHICS (TOG), ACM, US, vol. 28, no. 5, 1 December 2009 (2009-12-01), pages 1-9, XP058096159, ISSN: 0730-0301, DOI: 10.1145/1618452.1618505

## Description

### TECHNICAL FIELD

The present disclosure relates to the electronic device field, and more particularly, to a display device and a method for shooting and displaying an image.

### BACKGROUND

In the related art, a display with a camera function is typically provided with a front camera which is generally disposed at an upper part of the display. When a user takes a selfie using such a display with the front camera, he needs to look steadily at the front camera so as to acquire a photo with high quality. In this case, the user cannot gaze at the screen to observe effect of the selfie at the same time. However, if the user moves eyes from the front camera and looks steadily at the screen, a selfie with high quality cannot be acquired.

US 2011/019056 A1 discloses a bidirectional screen, which alternately switches between a display mode showing conventional graphics and a capture mode in which the LCD backlight is disabled and the LCD displays a pinhole array or a tiled-broadband code. A large-format image sensor is placed behind the liquid crystal layer. Together, the image sensor and LCD function as a mask-based light field camera, capturing an array of images equivalent to that produced by an array of cameras spanning the display surface. The recovered multi-view orthographic imagery is used to passively estimate the depth of scene points from focus.

US 2005/253834 A1 discloses a display apparatus, which has a display screen comprised of plurality of pixels displaying images based on image data, light sensors to detect light entering the display screen and arranged with display elements to form the pixels, and compound imaging systems comprised of imaging lenses forming images of a subject in the light-receiving part of the light sensors. Images of a subject are output from the plurality of light sensors, and a signal processing circuit synthesizes the image signals to generate image data. The image displayed by the display screen is based on the image data output by the signal processing circuit.

JP H0846162 A provides a display/image pickup apparatus in the same size as an existing image display apparatus only for image display by perfectly matching the eye lines of the two parties for communication in the two-way transfer of image data. The display/image pickup apparatus has a constitution that an image pickup element is provided for one pixel or a plurality pixels of display elements arranged in the shape of matrix on an image display substrate, an opposed substrate on which micro lenses for focusing an image to the center of image pickup element are formed corresponding to a plurality of image pickup elements is stacked on this image display substrate, an object is divided corresponding to a plurality of image pickup elements and the divided images of fine unit are respectively focused on a plurality of image pickup elements.

EP2475010 A1 discloses an organic light emitting diode (OLED) display apparatus having an optical sensing function is provided. The OLED display apparatus may photograph an external object by sensing input light from the external object that passes through an imaging pattern included in a display panel.

CN 101119435 A relates to an electronic device which has the function of camera and the manufacturing method. The electronic device consists of a main body, power wire, data port and an integrated camera device; the optical lens of the camera device is arranged at one side of plane of the display device pixel, faring away the user; the optical lens of the camera device faces the plane where the pixel of the display device is on; the aggregation of to-be-screened object image light route on the camera device is intersected with the display device; the part of the intersected image at the side which the camera device lens faces can be formed be a component which can transmit visible light. The electronical display device can be liquid display screen or plasma display. The electronic device can not only enable the user to look at the screen of display device, but also can screen the image in the eyes of the user without any effect to the display of the screen. The electronic device can achieve the view flow in the video chat.

CN 202696751 A provides an immediate multi-camera image integrating system, comprising at least two image receivers, which are connected in parallel or in series. Each image receiver comprises a camera, a lens group, a light sensing array and an analog-digital converter. An alignment processor is connected in parallel with the image receivers. The alignment processor integrates, in a plane-alignment or line-alignment manner, the optical images received by the optical image receivers and transmits the optical images to a processing unit of the next level. The alignment processor outputs the integrated images to a structure of the next level and declares that the size of the images is the size where the width enlarged by several times is multiplied by the original length. The immediate multi-camera image integrating system also comprises a signal processor, which performs required processing of the optical signals which are already treated by the alignment processor. The immediate multi-camera image integrating system makes the image processing more efficient, without the need of waiting for a long period of time after the images are captured. The images can be directly aligned, and the desired result is obtained. The immediate multi-camera image integrating system of the utility model saves the time and has the synchronous property.

US 2010/066800 A1 relates to a visual communication system, a method of conducting two-way visual communication and an apparatus. In one embodiment, the apparatus includes: a lens substrate having a first array of micro lenses on one side thereof, an optical output substrate having a second array of display pixels and an optical input substrate having a third array of image sensors laterally inter-dispersed with respect to display pixels of the first array and positioned to receive light from the micro lenses of the first array.

### SUMMARY

An objective of the present disclosure is to solve the above problems of the existing display screen, and to provide a display device with a camera function, in which a plurality of micro photosensitive imaging units are discretely disposed on a surface of a display screen, such that an object directly facing the display screen may be photographed from several angels and then a composite image with high quality may be acquired by a further subsequent processing.

The technical solution adopted by the present disclosure for solving the technical problems may be described as follows.

A display and a method according to the invention are set out in claims 1 and 7.

In at least one embodiment, the display device further includes: a driving circuit unit, configured to supply power to drive respective parts in the display device.

In at least one embodiment, the set of image processing chips is integrated in the driving circuit unit.

In at least one embodiment, the set of image processing chips includes: an image recognizing chip configured for image recognition; and an image overlaying and processing chip configured for image overlaying and post-processing.

In at least one embodiment, the plurality of photosensitive units are connected to the image recognizing chip, and the image recognizing chip is connected to the image overlaying and processing chip.

In at least one embodiment, the filter includes a pixel area configured to form pixels, the plurality of photosensitive units are fixed on the filter and disposed at intervals in the pixel area.

In at least one embodiment, before outputting and displaying the processed composite image by the displayer module, the method further includes determining whether the display device is displaying another image. If the display device is not displaying another image when shooting, outputting by the displayer module the processed composite image to a center of a screen of the display device for displaying. If the display device is displaying another image when shooting, zooming in a display window of the image displayed and arranging the display window at a corner of the screen of the display device, and outputting by the displayer module the processed composite image to a center of a screen of the display device for displaying.

In the display device with a camera function according to embodiments of the present disclosure, a plurality of micro photosensitive imaging units are discretely disposed on a surface of a display screen, such that an object directly facing the display screen may be photographed from several angles, and then a composite image with high quality may be acquired after post-processing. When a user uses the display device according to the present disclosure to conduct a video chat, a video image as if the pupils of the user direct to the camera may be obtained if the user looks at the center of display screen, such that problems existing in the related art may be solved.

### BRIEF DESCRIPTION OF THE DRAWINGS

In order to make the technical solutions of embodiments of the present invention more clearly, the accompanying drawings used in the description of embodiments of the present invention are briefly described hereunder. Obviously, the described drawings are merely some embodiments of present invention. For persons skilled in the art, other drawings may be obtained based on these drawings without any creative work.
Fig. 1 is a section view of a display device according to an embodiment of the present disclosure.
Fig. 2 is a schematic diagram of a surface structure of a filter in the display device shown in Fig. 1.
Fig. 3 is a schematic diagram of a structure of an upper glass substrate and a plurality of lens units in the display device shown in Fig. 1.
Fig. 4 is a schematic diagram of a pixel area shown in Fig. 2.
Fig. 5 is a schematic diagram of a plurality of photosensitive units shown in Fig. 2.
Fig. 6 is a flow chart of a method for shooting and displaying an image in the display device shown in Fig. 1.

### DETAILED DESCRIPTION

To make the objectives, the technical solutions, and the advantages of embodiments of the present invention clearer, the technical solutions in embodiments of the present invention are hereinafter described clearly and completely with reference to the accompanying drawings in embodiments of the present invention. Apparently, the described embodiments are merely a part of embodiments of the present invention, rather than all embodiments of the present invention. All other embodiments obtained by persons of ordinary skill in the art based on embodiments of the present invention without creative efforts shall fall within the protection scope of the present invention.

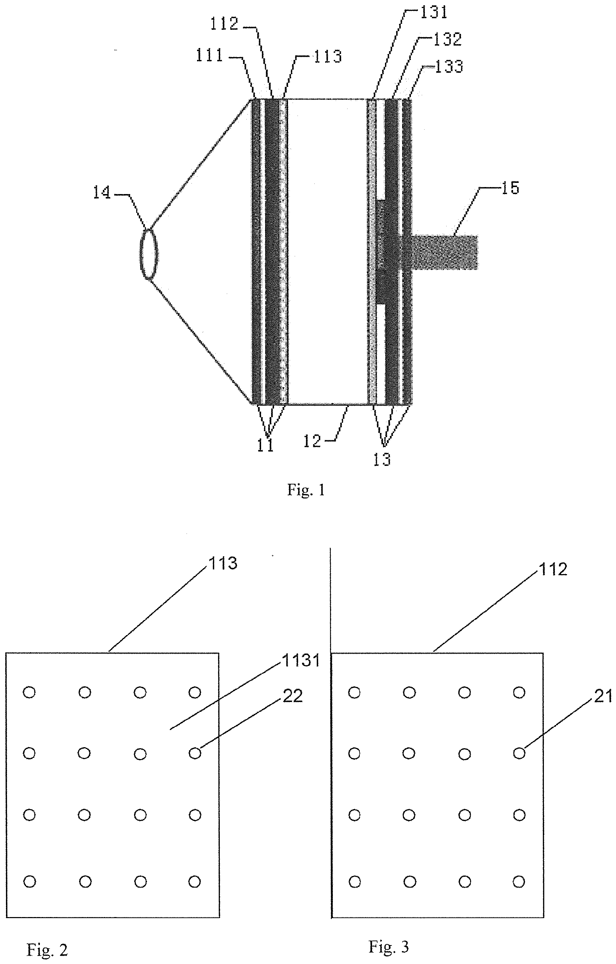

Fig. 1 illustrates a displayer module of a display device with a camera function provided in an embodiment of the present disclosure. As shown in Fig. 1, the displayer module includes an upper substrate assembly 11, a liquid crystal layer 12, a lower substrate assembly 13, a backlight module 14 and a driving circuit unit 15 arranged in sequence. Wherein, the upper substrate assembly 11 includes an upper polarizer 111, an upper glass substrate 112 and a filter 113 arranged in sequence. The lower substrate assembly 13 includes a lower glass substrate 131, a TFT array 132 and a lower polarizer 133 arranged in sequence. The liquid crystal layer 12 is filled between the upper substrate assembly 11 and the lower substrate assembly 13.

In at least one embodiment, the working principle of the displayer module is similar to that of a liquid crystal display in the related art. A TFT switch is controlled via a voltage at each pixel located at each row and column, such that a rotate degree of liquid crystal molecule may be controlled so as to control a display degree of each RGB sub pixel, thereby generating an image.

A camera module is integrated in the displayer module . In at least one embodiment, the camera module may include a plurality of camera sub-modules installed at intervals on a surface of the displayer module. Each camera sub-module of the camera module is configured to shoot an image of a region above the display screen and directly facing the camera sub-module. The camera module includes a plurality of lens units 21, a plurality of photosensitive units 22 matched with the plurality of lens units 21 respectively, and a set of image processing chips. The set of image processing chips is configured to process images generated by the camera module and to output a processed image.

In at least one embodiment, the set of image processing chips is integrated in the driving circuit unit 15. The set of image processing chips may include a driving chip configured for image recognition, more specifically and optionally, a CMOS-LCD driving chip.

The set of image processing chips further includes an image overlaying and processing chip configured for image overlaying and post-processing, more specifically and optionally, a VGA control chip. After a processing of such a chip, an overlay process is performed on images shot by all the photosensitive units 22 and a complete image may be typically acquired. An equivalent shooting angle of this complete image may be directly facing the display screen. Thus, this image is equivalent to an image photographed by a camera at the center of display screen from an angle perpendicular to the display screen. Since a photosensitive unit 22 for imaging includes a plurality of photosensitive pixels, the image generated after the processing has a more clear and comprehensive display effect than an image photographed by a conventional single camera.

In at least one alternative embodiment, images photographed by some photosensitive units 22 at some certain positions may be selected to be overlaid so as to generate a complete image. By selecting photosensitive units 22 at different positions, images photographed by photosensitive pixels at different positions may be acquired and overlaid so as to generate images at different shooting positions and angles.

Fig. 2 is a schematic diagram of a structure of a filter 113 shown in Fig. 1, and Fig. 3 is a schematic diagram of a structure of an upper glass substrate 112 and a plurality of lens units 21 corresponding to the filter 113. Referring to Figs. 2 and 3, the position of the filter 113 is matched with the position of the upper glass substrate 112, and the plurality of lens units 21 on the upper glass substrate 112 correspond to the plurality of photosensitive units 22 on the filter 113 respectively.

In Fig. 2, the filter 113 includes a pixel area 1131 and a plurality of photosensitive units 22.

In at least one embodiment, the filter 113 includes a pixel area 1131 and a plurality of photosensitive units 22. The plurality of photosensitive units 22 are fixed on the filter 113 and disposed at intervals in the pixel area 1131. The pixel area 1131 is configured to form pixels, which consists of RGB arrays. In at least one embodiment, the plurality of photosensitive units 22 are discretely distributed in the pixel area 1131. The arrangement of the plurality of photosensitive units 22 may be designed as needed. Considering the imaging requirement, the plurality of photosensitive units 22 may be designed in a way that they are uniformly disposed on a whole surface of the filter 113, such that a better imaging effect may be obtained.

In Fig. 3, the plurality of lens units 21 are disposed on the upper glass substrate 112 and correspond to the plurality of photosensitive units 22 respectively. When the plurality of photosensitive units 22 are uniformly disposed on the whole surface of the filter 113, the plurality of lens units 21 are also uniformly disposed on the whole surface of the glass substrate 112. Such design is equivalent to that a plurality of micro cameras are discretely disposed on the surface of display screen, such that the images of the region directly facing the display screen may be photographed from several angles and then may be subsequently processed by the set of image processing chips, so as to acquire a composite image with a high quality. When a user uses this display screen to conduct a video chat, a video image as if the pupils of the user direct to the camera may be obtained if the user looks at the center of display screen.

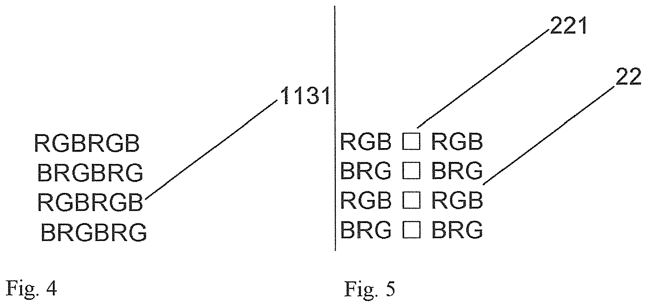

Fig. 4 is a schematic diagram of the pixel area 1131shown in Fig. 2, and Fig. 5 is a schematic diagram of the plurality of photosensitive units shown in Fig. 2. The pixel area 1131 only includes RGB arrays. The plurality of photosensitive units 22 include RGB arrays and photosensitive points 221. The photosensitive points and the RGB arrays are disposed alternatively. In at least one embodiment, the RGB array is similar to that in an existing liquid crystal display and the photosensitive point may consist of a thin layer of photosensitive material. In at least one embodiment, silver salt photosensitive material such as silver halide grain may be chosen and used.

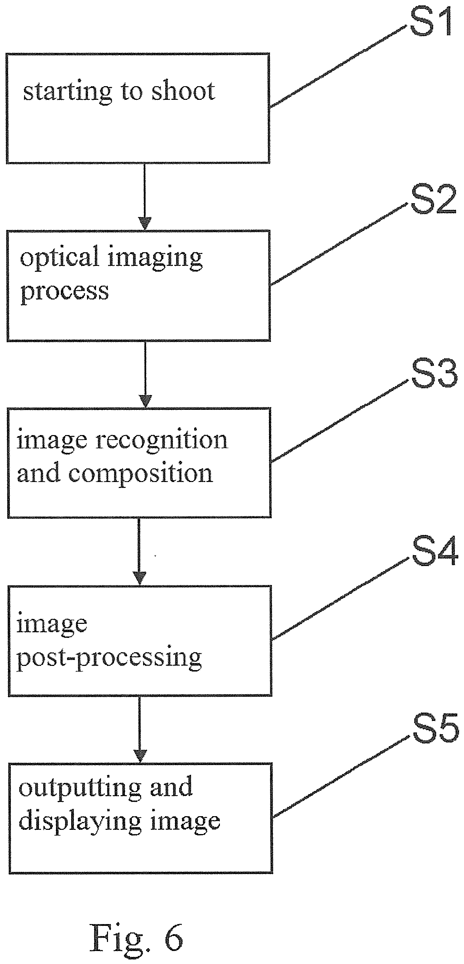

Fig. 6 is a flow chart showing a method for shooting and displaying an image in the display screen shown in Fig. 1.

In step S1, the display device shown in Fig. 1 is provided and function of shoot is started.

In step S2, the light from an object facing a display screen of the display device passes through the upper polarizer 111, enters the plurality of lens units 21, and then enters the plurality of photosensitive units 22 after being focused by the plurality of lens units 21, such that images may be generated and inputted into the set of image processing chips.

In step S3, an image recognition and overlaying process is performed on the images by the set of image processing chips, so as to acquire a composite image.

In step S4, a smooth transition process is performed on the composite image by the set of image processing chips so as to acquire a processed composite image.

In step S5, the processed composite image is outputted and displayed using the displayer module of the display device shown in Fig. 1, such that a video image of the region directly facing the display screen may be obtained in the display screen. In at least one embodiment, before outputting and displaying the image, it is determined whether the display device is displaying another image. If the display device is not displaying another image when shooting, the displayer module outputs the processed composite image to the center of screen of the display device for displaying.

If the display device is displaying another image when shooting, the display window of the displayed image is zoomed out and arranged at a corner of screen of the display device. Then, the displayer module outputs the processed composite image to the center of screen of the display device for displaying.

In the related art, a display with a camera function is typically provided with a front camera which is generally disposed at an upper of the display. When a user takes a selfie using such a display with a front camera, he needs to look steadily at the front camera so as to acquire a selfie with high quality. In this case, the user cannot gaze at the screen to observe effect of the selfie at the same time. However, if the user moves eyes from the front camera and looks steadily at the screen, a photo with high quality cannot be acquired.

In the display device with a camera function according to embodiments of the present disclosure, a plurality of micro photosensitive imaging units are discretely disposed on a surface of a display screen, such that an object directly facing the display screen may be photographed from several angles, and then a composite image with high quality may be acquired after post-processing. When a user uses the display device according to the present disclosure to conduct a video chat, a video image as if the pupils of the user direct to the camera may be obtained if the user looks at the center of display screen, such that problems existing in the related art may be solved.

## Claims

1. A display device, comprising:
a displayer module;
a camera module, installed in the displayer module and configured to shoot images of an external object directly facing the displayer module;
wherein the camera module comprises:
a plurality of lens units (21), installed at intervals on a surface of the displayer module;
a plurality of photosensitive units (22), matched with the plurality of lens units (21) respectively; and
a set of image processing chips, configured to process the images generated by the camera module,
the displayer module comprises an upper substrate assembly (11), a liquid crystal layer (12), a lower substrate assembly (13) and a backlight module (14) arranged in sequence;
the upper substrate assembly (11) comprises an upper polarizer (111), an upper glass substrate (112) and a filter (113) arranged in sequence;
the lower substrate assembly (13) comprises a lower glass substrate (131), a TFT array (132) and a lower polarizer (133) arranged in sequence;
the liquid crystal layer (12) is filled between the upper substrate assembly (11) and the lower substrate assembly (13);
wherein
the plurality of lens units (21) are disposed on the upper glass substrate (112) and correspond to the plurality of photosensitive units (22) disposed on the filter (113) respectively.

2. The display device according to claim 1, further comprising:
a driving circuit unit (15), configured to supply power to drive the display device.

3. The display device according to claim 2, wherein the set of image processing chips is integrated in the driving circuit unit (15).

4. The display device according to any one of claims 1 to 3, wherein the set of image processing chips comprises:
an image recognizing chip, configured for image recognition; and
an image overlaying and processing chip, configured for image overlaying and post-processing.

5. The display device according to claim 4, wherein the plurality of photosensitive units (22) are connected to the image recognizing chip, and the image recognizing chip is connected to the image overlaying and processing chip.

6. The display device according to any one of claims 1 to 5, wherein the filter (113) comprises a pixel area (1131) configured to form pixels, and the plurality of photosensitive units (22) are fixed on the filter (113) and disposed at intervals in the pixel area (1131).

7. A method for shooting and displaying an image in a display device according to any one of claims 1 to 6, comprising:
generating (S2) images by a plurality of photosensitive units (22), by making light from an object facing the display device pass through an upper substrate assembly (11), enter a plurality of lens units (21) and enter the plurality of photosensitive units (22), pass through a liquid crystal layer (12) and a lower substrate assembly (13), and inputting the images into a set of image processing chips;
performing an overlaying process (S3) on the images by the set of image processing chips to acquire a composite image;
performing a post-process (S4) on the composite image by the set of image processing chips to acquire a processed composite image; and
outputting and displaying (S5) the processed composite image by the displayer module.

8. The method according to claim 7, further comprising:
determining whether the display device is displaying another image before outputting and displaying the processed composite image;
if the display device is not displaying another image, outputting by the displayer module the processed composite image to a center of a screen of the display device for displaying;
if the display device is displaying another image, zooming out a display window of the image displayed and arranging the display window at a corner of the screen of the display device, and outputting by the displayer module the processed composite image to a center of a screen of the display device for displaying.

9. The method according to claim 7 or 8, further comprising:
selecting one or more of the images by the set of image processing chips; and
performing the overlaying process on the one or more of the images selected by the set of image processing chips to acquire a composite image.

10. The method according to any one of claims 7 to 9, wherein the post-process comprises a smooth transition process.

## Patentansprüche

1. Anzeigevorrichtung, umfassend:
ein Anzeigemodul;
ein Kameramodul, welches in dem Anzeigemodul installiert ist und dazu konfiguriert ist, Bilder eines sich direkt gegenüber dem Anzeigemodul befindenden externen Objektes aufzunehmen;
wobei das Kameramodul Folgendes umfasst:
eine Vielzahl von in Abständen auf einer Oberfläche des Anzeigemoduls angebrachten Linseneinheiten (21);
eine Vielzahl von jeweils der Vielzahl von Linseneinheiten (21) zugeordneten lichtempfindlichen Einheiten (22); und
einen Satz Bildverarbeitungschips, welcher dazu konfiguriert ist, die durch das Kameramodul erzeugten Bilder zu verarbeiten,
das Anzeigemodul umfasst nacheinander angeordnet eine obere Substratanordnung (11), eine Flüssigkristallschicht (12), eine untere Substratanordnung (13) und ein Hintergrundbeleuchtungsmodul (14);
die obere Substratanordnung (11) umfasst nacheinander angeordnet einen oberen Polarisator (111), ein oberes Glassubstrat (112) und einen Filter (113);
die untere Substratanordnung (13) umfasst nacheinander angeordnet ein unteres Glassubstrat (131), ein TFT-Array (132) und einen unteren Polarisator (133);
die Flüssigkeitsschicht (12) ist zwischen die obere Substratanordnung (11) und die untere Substratanordnung (13) gefüllt;
wobei
die Vielzahl von Linseneinheiten (21) auf dem oberen Glassubstrat (112) angeordnet ist und jeweils der auf dem Filter (113) angeordneten Vielzahl von lichtempfindlichen Einheiten (22) zugeordnet ist.

2. Anzeigevorrichtung nach Anspruch 1, des Weiteren umfassend:
eine Treiberschaltungseinheit (15), welche dazu konfiguriert ist, Strom zum Betreiben der Anzeigevorrichtung zu liefern.

3. Anzeigevorrichtung nach Anspruch 2, wobei der Satz Bildverarbeitungschips in die Treiberschaltungseinheit (15) eingebaut ist.

4. Anzeigevorrichtung nach einem der Ansprüche 1 bis 3, wobei der Satz Bildverarbeitungschips Folgendes umfasst:
einen zur Bilderkennung konfigurierten Bilderkennungschip; und
einen zur Bildüberlagerung und zur Bildnachverarbeitung konfigurierten Bildüberlagerungs- und Bildverarbeitungschip.

5. Anzeigevorrichtung nach Anspruch 4, wobei die Vielzahl von lichtempfindlichen Einheiten (22) mit dem Bilderkennungschip verbunden ist und der Bilderkennungschip mit dem Bildüberlagerungs- und Bildverarbeitungschip verbunden ist.

6. Anzeigevorrichtung nach einem der Ansprüche 1 bis 5, wobei der Filter (113) einen zum Bilden von Pixeln konfigurierten Pixelbereich (1131) umfasst und die Vielzahl von lichtempfindlichen Einheiten (22) auf dem Filter (113) befestigt ist und in Abständen im Pixelbereich (1131) angeordnet ist.

7. Verfahren zum Aufnehmen und Anzeigen eines Bildes in einer Anzeigevorrichtung nach einem der Ansprüche 1 bis 6, umfassend:
Erzeugen (S2) von Bildern durch eine Vielzahl von lichtempfindlichen Einheiten (22), indem Licht von einem der Anzeigevorrichtung gegenüberliegenden Objekt durch eine obere Substratanordnung (11) hindurch geleitet wird, in eine Vielzahl von Linseneinheiten (21) und in die Vielzahl von lichtempfindlichen Einheiten (22) eintritt, und eine Flüssigkristallschicht (12) und eine untere Substratanordnung (13) durchströmt, und Einfügen der Bilder in einen Satz Bildverarbeitungschips;
Durchführen eines Überlagerungsprozesses (S3) bei den Bildern durch den Satz Bildverarbeitungschips, um ein zusammengesetztes Bild zu erhalten;
Durchführen einer Nachverarbeitung (S4) bei dem zusammengesetzten Bild durch den Satz Bildverarbeitungschips, um ein verarbeitetes zusammengesetztes Bild zu erhalten; und
Ausgeben und Anzeigen (S5) des verarbeiteten zusammengesetzten Bildes durch das Anzeigemodul.

8. Verfahren nach Anspruch 7, des Weiteren umfassend:
Feststellen, ob die Anzeigevorrichtung vor dem Ausgeben und Anzeigen des verarbeiteten zusammengesetzten Bildes ein weiteres Bild anzeigt;
wenn die Anzeigevorrichtung kein weiteres Bild anzeigt, Ausgeben des verarbeiteten zusammengesetzten Bildes durch das Anzeigemodul an eine Bildschirmmitte der Anzeigevorrichtung zum Anzeigen;
wenn die Anzeigevorrichtung ein weiteres Bild anzeigt, Verkleinern eines Anzeigefensters des angezeigten Bildes und Anordnen des Anzeigefensters in einer Ecke des Bildschirms der Anzeigevorrichtung, und Ausgeben des verarbeiteten zusammengesetzten Bildes durch das Anzeigemodul an eine Bildschirmmitte der Anzeigevorrichtung zum Anzeigen.

9. Verfahren nach Anspruch 7 oder 8, des Weiteren umfassend:
Auswählen eines oder mehrerer der Bilder durch den Satz Bildverarbeitungschips; und
Durchführen des Überlagerungsprozesses bei dem einen oder den mehreren ausgewählten Bildern durch den Satz Bildverarbeitungschips, um ein zusammengesetztes Bild zu erhalten.

10. Verfahren nach einem der Ansprüche 7 bis 9, wobei die Nachverarbeitung einen reibungslosen Übergangsprozess umfasst.

## Revendications

1. Dispositif d'affichage, comprenant :
un module d'affichage ;
un module de caméra installé dans le module d'affichage et configuré pour prendre des images d'un objet externe situé directement en face du module d'affichage ;
le module de caméra comprenant :
une pluralité d'unités de lentilles (21) installée à intervalles sur une surface d'un module d'affichage ;
une pluralité d'unités photosensibles (22) mise en correspondance avec la pluralité d'unités de lentilles (21) ; et
un ensemble de puces de traitement d'images configuré pour traiter les images générées par le module de caméra,
le module d'affichage comprend un ensemble de substrat supérieur (11), une couche de cristaux liquides (12), un ensemble de substrat inférieur (13) et un module de rétroéclairage (14) disposés en séquence ;
l'ensemble de substrat supérieur (11) comprend un polariseur supérieur (111), un substrat de verre supérieur (112) et un filtre (113) disposés en séquence ;
l'ensemble de substrat inférieur (13) comprend un substrat de verre inférieur (131), une matrice TFT (132) et un polariseur inférieur (133) disposés en séquence ;
la couche de cristaux liquides (12) est remplie entre l'ensemble de substrat supérieur (11) et l'ensemble de substrat inférieur (13) ;
la pluralité d'unités de lentilles (21) est disposée sur le substrat de verre supérieur (112) et est mise en correspondance avec la pluralité d'unités photosensibles (22) disposée sur le filtre (113).

2. Dispositif d'affichage selon la revendication 1, comprenant en outre :
une unité de circuit de commande (15) configurée pour fournir de l'énergie pour faire fonctionner le dispositif d'affichage.

3. Dispositif d'affichage selon la revendication 2, l'ensemble de puces de traitement d'images étant intégré dans l'unité de circuit de commande (15).

4. Dispositif d'affichage selon l'une quelconque des revendications 1 à 3, l'ensemble de puces de traitement d'images comprenant :
une puce de reconnaissance d'images configurée pour la reconnaissance d'images; et
une puce de superposition d'images et de traitement d'images configurée pour la superposition d'images et le post-traitement.

5. Dispositif d'affichage selon la revendication 4, la pluralité d'unités photosensibles (22) étant connectée à la puce de reconnaissance d'images, et la puce de reconnaissance d'images étant connectée à la puce de superposition d'images et de traitement d'images.

6. Dispositif d'affichage selon l'une quelconque des revendications 1 à 5, le filtre (113) comprenant une zone de pixels (1131) configurée pour former des pixels, et la pluralité d'unités photosensibles (22) étant fixée sur le filtre (113) et disposée à intervalles dans la zone de pixels (1131).

7. Procédé pour prendre et afficher une image dans un dispositif d'affichage selon l'une quelconque des revendications 1 à 6, comprenant :
générer (S2) des images par une pluralité d'unités photosensibles (22) en faisant passer la lumière d'un objet situé en face du module d'affichage au travers d'un ensemble de substrat supérieur (11), en faisant la entrer dans une pluralité d'unités de lentilles (21) et dans la pluralité d'unités photosensibles (22), et en faisant la passer au travers d'une couche de cristaux liquides (12) et au travers d'un ensemble de substrat inférieur (13), et introduire les images dans un ensemble de puces de traitement d'images ;
réaliser un traitement de superposition (S3) sur les images par l'ensemble de puces de traitement d'images pour acquérir une image composite ;
réaliser un post-traitement (S4) sur l'image composite par l'ensemble de puces de traitement d'images pour acquérir une image composite traitée ; et
sortir et afficher (S5) l'image composite traitée par le module d'affichage.

8. Procédé selon la revendication 7, comprenant en outre :
déterminer si le dispositif d'affichage affiche une autre image avant de sortir et afficher l'image composite traitée ;
lorsque le dispositif d'affichage n'affiche pas une autre image, sortir l'image composite traitée vers un centre d'un écran du dispositif d'affichage par le module d'affichage pour l'affichage ;
lorsque le dispositif d'affichage affiche une autre image, dézoomer une fenêtre d'affichage de l'image affichée et disposer la fenêtre d'affichage au coin de l'écran du dispositif d'affichage, et sortir l'image composite traitée vers un centre d'un écran du dispositif d'affichage par le module d'affichage pour l'affichage.

9. Procédé selon la revendication 7 ou 8, comprenant en outre :
sélectionner une ou plusieurs des images par l'ensemble de puces de traitement d'images ; et
réaliser le traitement de superposition sur l'une ou les plusieurs des images sélectionnées par l'ensemble de puces de traitement d'images pour acquérir une image composite.

10. Procédé selon l'une quelconque des revendications 7 à 9, le post-traitement comprenant un traitement de transition sans heurt.
